# EUROPÄISCHE PATENTSCHRIFT

(11) **EP 1 810 101 B1**
(45) Veröffentlichungstag und Bekanntmachung des Hinweises auf die Patenterteilung: **22.04.2009**
(21) Anmeldenummer: 05800682.6
(22) Anmeldetag: 09.11.2005
(51) Int. Cl.: G05D 7/01, G05D 16/10

(54) **VORRICHTUNG ZUR DYNAMISCHEN REGELUNG EINES WASSERFLUSSES**
DEVICE FOR DYNAMIC CONTROL OF A WATER FLOW
DISPOSITIF POUR LA REGULATION DYNAMIQUE D'UN ECOULEMENT D'EAU

(30) Priorität: 09.11.2004 IT TO20040776
(43) Veröffentlichungstag der Anmeldung: 25.07.2007
(73) Patentinhaber: MASCO CORPORATION OF INDIANA, Indianapolis, IN 46280 (US)
(72) Erfinder: KNAPP, Alfons, 88400 Biberach (DE)
(74) Vertreter: Knapp, Thomas
(86) Internationale Anmeldenummer: PCT/IB2005/003360
(87) Internationale Veröffentlichungsnummer: WO 2006/051391

(56) Entgegenhaltungen:
- DE-A1- 4 030 159
- GB-A- 721 031
- US-A- 3 809 111
- US-A- 5 099 875
- US-A- 6 129 112

## Beschreibung

Die vorliegende Erfindung betrifft eine Vorrichtung zur dynamischen Regelung eines Wasserflusses, wie sie eingesetzt wird, um die Funktionsweise eines thermostatischen Mischers zu stabilisieren.

Die thermostatischen Mischer, die dafür geeignet sind, einen großen Durchfluss zu bewältigen, funktionieren regelmäßig dann nicht, wenn der Durchfluss, der von ihnen angefordert wird, viel kleiner als der maximale Durchfluss ist, für den sie ausgelegt sind, wie es beispielsweise auftritt, wenn ein zum Versorgen einer Anlage mit mehreren Duschen geeigneter thermostatischer Mischer zum Versorgen einer einzigen Dusche verwendet wird. Unter diesen Umständen verlieren die thermostatischen Mischer ihre Stabilität und versetzen sich in Schwingung, so dass der von ihnen abgeleitete Wasserfluss ständigen Änderungen des Verhältnisses der Mischung zwischen kaltem Wasser und warmem Wasser unterliegt und somit Temperaturschwankungen erleidet, die für den Benutzer unangenehm sind und gefährlich werden können. Dieser Nachteil kann dadurch behoben werden, dass dem dem thermostatischen Mischer zugeführten Fluss des kalten Wassers ein Widerstand entgegengesetzt wird, wenn kleine Durchflüsse von Mischwasser gefördert werden sollen, und dieser Widerstand unterdrückt oder reduziert wird, wenn große Durchflüsse von Mischwasser gefördert werden sollen. Dieser Vorgang wird automatisch von Vorrichtungen zur dynamischen Regelung des Flusses ausgeführt, bei denen vorgesehen ist, den dem ankommenden kalten Wasser zur Verfügung gestellten Durchgangsquerschnitt zu reduzieren, wenn der aufgenommene Durchfluss reduziert ist, und einen größeren Durchgangsquerschnitt wiederherzustellen, wenn ein größerer Durchfluss angefordert wird. Dennoch besitzen die bekannten Vorrichtungen zur dynamischen Regelung des Flusses im allgemeinen den Nachteil, dass sie einen Kolben aufweisen, auf den in einer Richtung der Druck des ankommenden Wassers und in der entgegengesetzten Richtung eine Rückholfeder wirkt. Die Last der Feder muss daher abhängig vom Zulaufdruck des kalten Wassers eingestellt werden. Dies bringt es mit sich, dass einerseits für eine korrekte Funktionsweise die Vorrichtung bei ihrer Installation an die in der Anlage vorhandenen Druckbedingungen angepasst werden muss und dass andererseits die Funktionsweise der Vorrichtung nicht mehr regulär ist, wenn beträchtliche Variationen im Zulaufdruck des kalten Wassers auftreten.

GB 721,031 beschreibt eine Ventileinrichtung mit einem Rückschlagventil und einem einstellbaren Bypass.

Hauptaufgabe der vorliegenden Erfindung ist es, eine Vorrichtung zur dynamischen Regelung eines Flusses zu schaffen, deren Funktionieren in weiten Bereichen unabhängig vom Zulaufdruck sein muss, so dass die Vorrichtung bei der Durchführung ihrer Installation keine Einstellungen erfordern darf und selbst dann nicht irregulär funktionieren darf, wenn beträchtliche Variationen des Zulaufdrucks auftreten.

Eine weitere Aufgabe der vorliegenden Erfindung besteht darin, eine derartige Vorrichtung zur dynamischen Regelung des Flusses zu schaffen, die von einfacher Konstruktion und kostengünstig ist sowie eine große Zuverlässigkeit und eine lange Lebensdauer gewährleistet.

Eine weitere Aufgabe der Erfindung liegt darin, eine derartige Vorrichtung zu schaffen, die in einen Absperrhahn eingebaut werden kann, mit dem die thermostatischen Mischer oft ausgerüstet sind, so dass kein zusätzliches Element in die Anlage aufgenommen werden muss.

Diese Aufgaben werden erfindungsgemäß gelöst mit einer Vorrichtung zur dynamischen Regelung eines Flusses, umfassend, in einem Körper, einen Einlassanschluss, eine Zulaufkammer, eine Ablaufkammer, einen Kolben, der zwischen der Zulaufkammer und der Ablaufkammer angeordnet und beweglich ist zwischen einer ersten Position, die zur Zulaufkammer hin verschoben ist, wobei der Kolben in der ersten Position den Fluss zwischen der Zulaufkammer und der Ablaufkammer verengt, und einer zweiten Position, die zur Ablaufkammer hin verschoben ist, wobei der Kolben in der zweiten Position den Fluss zwischen der Zulaufkammer und der Ablaufkammer nicht verengt, und eine Rückholfeder, die den Kolben zur ersten Position hin beaufschlagt, dadurch gekennzeichnet, dass die Zulaufkammer zumindest teilweise ringförmig ist und den Kolben umgibt, dass der Kolben einen im Bereich der Zulaufkammer angeordneten zylindrischen Mantelabschnitt und einen transversalen Abschnitt, der eine Zwischenkammer definiert und von einem axialen begrenzten Durchgang durchsetzt ist, umfasst, dass zwischen dem Einlassanschluss und der Zwischenkammer ein Durchflussbegrenzungsmittel angeordnet ist, und dass der axiale begrenzte Durchgang und die Rückholfeder so proportional zueinander sind, dass die Wirkung der Feder im Wesentlichen der Kraft entspricht, die dazu neigt, den Kolben aus der ersten Position in die zweite Position zu verschieben, wenn der von dem Durchflussbegrenzungsmittel zugelassene maximale Fluss abgeleitet wird.

Auf diese Weise kann der Kolben nicht durch den Zulaufdruck verschoben werden, da dieser hauptsächlich in radialer Richtung wirkt und dieser Vorgang, wie auch immer sein Wert sei, nicht dazu neigt, den Kolben aus dessen erster Position in Richtung von dessen zweiter Position zu verschieben. Der Druck, der sich in der Zwischenkammer ausbildet, ist durch den Druckabfall bestimmt, den der Fluss beim Durchgang vom Einlassanschluss über das Durchflussbegrenzungsmittel zur Zwischenkammer erleidet. Die auf den Kolben in axialer Richtung und in entgegengesetzter Richtung wie diejenige der Rückholfeder ausgeübte Wirkung beruht im Wesentlichen auf der Differenz zwischen dem in der Zwischenkammer herrschenden Druck und dem in der Ablaufkammer herrschenden Druck, der aufgrund des vom Fluss beim Durchqueren des im transversalen Abschnitt des Kolbens vorhandenen axialen begrenzten Durchganges erlittenen Druckabfalls kleiner als der erstgenannte Druck ist; diese Druckdifferenz wirkt auf den transversalen Abschnitt des Kolbens und neigt dazu, die Kraft der Rückholfeder zu überwinden. Eine geeignete Dimensionierung hinsichtlich des Querschnitts des in dem transversalen Abschnitt des Kolbens vorgesehenen begrenzten Durchgangs, der Kraft der Rückholfeder und der Charakteristika des Durchflussbegrenzungsmittels wiederum ermöglicht es zu erreichen, dass sich der Kolben nicht aus seiner ersten Position in seine zweiten Position verschiebt, so lange ein Fluss abgeleitet wird, der kleiner als der maximale Fluss ist, der eine Instabilität in einem thermostatischen Mischer hervorrufen kann.

Wenn jedoch von der Ablaufkammer ein Fluss angefordert wird, der größer als der oben definierte ist, wird der Druckabfall in der Ablaufkammer so, dass die auf den Kolben wirkende Druckdifferenz die Kraft der Rückholfeder übersteigt, und dann verschiebt sich der Kolben in seine zweiten Position, wodurch er den Durchgang des Flusses von der Zulaufkammer zur Zwischenkammer und dann zur Ablaufkammer freigibt.

Da dasjenige, das die Verschiebung des Kolbens steuert bzw. regelt, nicht der in den Kammern der Vorrichtung herrschende Absolutdruck, sondern die Druckdifferenz zwischen der Zwischenkammer und der Ablaufkammer ist, die von dem Fluss und den sich diesem widersetzenden Widerständen abhängt, aber nicht von dem Absolutdruck, ist das Funktionieren der Vorrichtung in großem Umfang unabhängig von dem Zulaufdruck, und die Vorrichtung wiederum erfordert beim Vorgang ihrer Installation keinerlei Anpassung und zeigt keine Unregelmäßigkeit des Funktionierens, selbst wenn der Zulaufdruck erheblich variiert.

Das in der erfindungsgemäßen Vorrichtung verwendete Durchflussbegrenzungsmittel ist ein in der Technik bekanntes Ventil, das zu geringen Kosten handelsüblich erhältlich ist und das beispielsweise in verschiedenen Formen in den Patentveröffentlichungen DE 40 41 116, DE 102 20 287, DE 102 28 490 und WO 01/04714 beschrieben ist. Dieses Ventil stellt dem Fluss einen Durchgang mit reduziertem Widerstand zur Verfügung, solange die Durchflussmenge des Flusses eine durch die Konstruktion des Durchflussbegrenzungsmittels voreingestellte Grenze nicht überschreitet, während das Ventil, wenn der Fluss dazu tendiert, diese Grenze zu überschreiten, dem Fluss einen Widerstand so entgegengesetzt, dass der Durchfluss auf den maximal zulässigen Wert begrenzt wird. Ventile dieser Art werden oft in Einrichtungen eingebaut, wie beispielsweise Duschen, bei denen, in bestimmten Fällen auch aus gesetzlichen Gründen, der Verbrauch begrenzt sein muss. Diese Ventile sind für viele Grenzwerte für den Durchfluss erhältlich, und somit ist eine angemessene Auswahl des Durchflussbegrenzungsmittels sowie eine entsprechende Proportionierung der Teile der Vorrichtung in der oben beschriebenen Weise ausreichend, um erfindungsgemäß eine Durchflussregelvorrichtung zu schaffen, die an die Notwendigkeiten verschiedener spezifischer Anwendungen angepasst ist.

In vorteilhafter Weise ist die Zwischenkammer in dem Körper der Vorrichtung durch den Zulaufanschluss begrenzt, in dem eine Einlasskammer definiert ist und der eine transversale Wand aufweist, in der axiale Umfangsdurchgänge gebildet sind, die in der ringförmigen Zulaufkammer münden, die den Kolben umgibt, während im Zentrum der transversalen Wand das Durchflussbegrenzungsmittel installiert ist.

Die Einlasskammer und die axialen Umfangsdurchgänge können aus Durchgängen gebildet sein, die in einem Zusatzelement enthalten sind, das zwischen den Körper der Vorrichtung und den Zulaufanschluss, dessen Teil es ist, eingesetzt ist. Dieses Zusatzelement kann vorteilhafterweise aus gestanztem Kunststoffmaterial hergestellt sein.

In seiner ersten Schließposition kann der Kolben an einer ebenen Oberfläche des Zulaufanschlusses anliegen, oder er kann teilweise in einen von der Oberfläche gebildeten Sitz eingreifen.

Angesichts der extremen Einfachheit der erfindungsgemäßen Vorrichtung und ihrer reduzierten Abmessungen ist es möglich, sie in einen Absperrhahn einzubauen. Oft sind die thermostatischen Mischer mit einem Absperrhahn versehen, um deren Wartung zu vereinfachen, und daher ist es möglich, in Serie zum thermostatischen Mischer ein einziges Zusatzteil zu montieren, das sowohl den Absperrhahn als auch die Vorrichtung zur dynamischen Regelung des Flusses enthält, anstatt zwei verschiedene Zusatzteile einbauen zu müssen.

Insbesondere bei der Durchführung des Einbaus ist es vorteilhaft, dass die Richtung der Verschiebung des Kolbens und die Achse eines Verschlusselements des Absperrhahns zusammenfallen.

Außerdem ist ein die erfindungsgemäße Vorrichtung enthaltender Absperrhahn selbst ebenso Teil der Erfindung.

Diese und weitere Charakteristika, Aufgaben und Vorteile des Gegenstands der vorliegenden Erfindung gehen besser aus der folgenden Beschreibung einiger Ausführungsformen unter Bezug auf die begleitenden Zeichnungen hervor, die nicht beschränkende Beispiele darstellen, von denen:
Fig. 1 in Axialschnitt eine Vorrichtung zur dynamischen Regelung eines Flusses gemäß einer ersten Ausführungsform der vorliegenden Erfindung im Zustand der Ruhe oder einem Ablauf mit reduziertem Fluss darstellt.
Fig. 2 die gleiche Vorrichtung der Fig. 1 im Zustand des Ablaufs mit erhöhtem Fluss darstellt.
Fig. 3 und 4 analog zu Fig. 1 und 2 eine zweite Ausführungsform der erfindungsgemäßen Vorrichtung darstellen.
Fig. 5 und 6 eine dritte bzw. eine vierte Ausführungsform der Erfindung im Ruhezustand darstellen.
Fig. 7 und 8 eine fünfte Ausführungsform der Erfindung im Ruhezustand bzw. im Zustand des Ablaufs mit erhöhtem Fluss darstellen.
Fig. 9 darstellt, wie die Vorrichtung gemäß Fig. 6 in einen im Ruhezustand dargestellten Absperrhahn eingebaut werden kann.
Fig. 10 den Absperrhahn gemäß Fig. 9 im Zustand des Ablaufs mit großem Durchfluss darstellt.

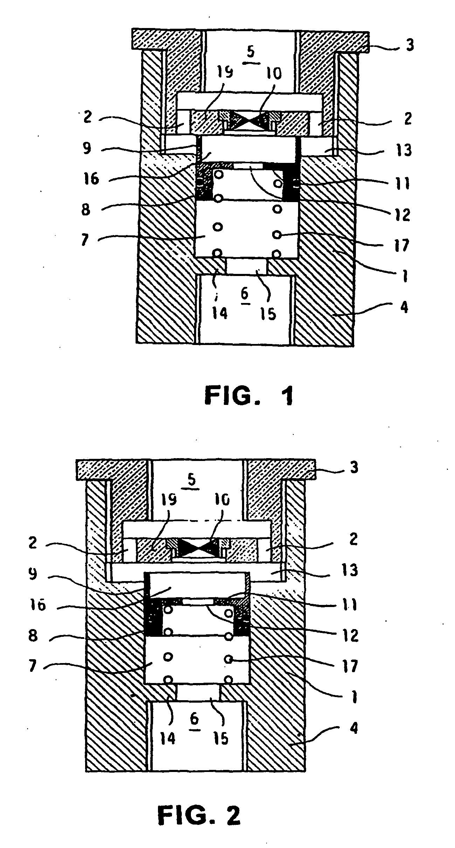

In den Fig. 1 und 2 ist in Axialschnitt eine Vorrichtung für die dynamische Regelung eines Wasserflusses von dem Typ dargestellt, wie er zur Stabilisierung der Funktionsweise eines thermostatischen Mischers verwendet wird, der einen Körper 1 umfasst, der in diesem Fall oben von einem Zulaufanschluss 3 vervollständigt wird und einen Ablaufanschluss 4 bildet. Der Zulaufanschluss 3 bildet in seinem Inneren eine Einlasskammer 5, und der Ablaufanschluss 4 bildet in seinem Inneren einen Ablaufdurchgang 6, der mit einer Ablaufkammer 7 in Verbindung steht, die den Innenraum des Körpers 1 einnimmt.

In der Ablaufkammer 7 ist ein Kolben 8 verschieblich angeordnet, der einen zylinderförmigen Mantelabschnitt 9 und einen von einem begrenzten axialen Durchgang 12 durchsetzten transversalen Abschnitt 11 aufweist. Der Mantelabschnitt 9 und der transversale Abschnitt 11 des Kolbens 8 begrenzen eine Zwischenkammer 16.

In dem Körper 1 ist um den Mantelabschnitt 9 des Kolbens 8 herum eine ringförmige Zulaufkammer 13 gebildet, die von einer transversalen Wand 19 des Zulaufanschlusses 3 begrenzt und von der Einlasskammer 5 über axiale Umfangsdurchgänge 2 versorgt wird, die in der transversalen Wand 19 des Zulaufanschlusses 3 vorgesehen sind.

In dem Körper 1 ist der Ablaufanschluss 4 durch eine von einem Durchgang 15 durchsetzte transversale Wand 14 begrenzt. Zwischen dieser Wand 14 und dem Kolben 8 ist eine Feder 17 angeordnet, die wiederum den Kolben 8 mit dem Rand seines Mantelabschnitts 9 gegen die transversale Wand 19 des Zulaufanschlusses 3 drückt, der die Zulaufkammer 13 begrenzt. Dies ist die in Fig. 1 dargestellte Ruheposition der Vorrichtung.

Im zentralen Bereich der transversalen Wand 19 des Zulaufanschlusses 3 ist ein Durchflussbegrenzungsmittel 10 installiert, das sich wiederum zwischen der Einlasskammer 5 und der Zwischenkammer 16 befindet. Dies ermöglicht permanent, von der Einlasskammer 5 zur Zwischenkammer 16 und danach von dieser zur Ablaufkammer 7 und zum Ablaufdurchgang 6, den Durchgang eines Flusses, der jedoch einen Grenzwert nicht überschreiten kann, der durch die Charakteristika des Durchflussbegrenzungsmittels bestimmt ist. Da ein thermostatischer Mischer zu stabilisieren ist, wird das Durchflussbegrenzungsmittel 10 so gewählt, dass die von ihm bestimmte Grenze des Durchflusses dem maximalen Wert des Durchflusses entspricht, der in der Lage ist, die Schwingung des betrachteten thermostatischen Mischers hervorzurufen.

In der in Fig. 1 dargestellten Ruheposition kann die gesamte Vorrichtung von einem Fluss durchquert werden, der durch das Durchflussbegrenzungsmittel 10 begrenzt ist. Wenn ein derartiger begrenzter Fluss vorhanden ist, ist der Zulaufdruck in der Einlasskammer 5 und in der Zulaufkammer 13 vorhanden, ist der Druck in der Zwischenkammer 16 aufgrund des Druckabfalls, den der Fluss durch das Durchqueren des Durchflussbegrenzungsmittels 10 erlitten hat, geringfügig kleiner als der Zulaufdruck, und ist der Druck in der Ablaufkammer 7 aufgrund des Druckabfalls, den der Fluss durch das Durchqueren des begrenzten Durchgangs 12 erlitten hat, weiter reduziert. Durch die Differenz zwischen dem in der Zwischenkammer 16 herrschenden Druck und dem in der Ablaufkammer 7 herrschenden geringeren Druck wird der Kolben dahingehend beaufschlagt, sich von dem Zulaufanschluss 3 zu entfernen, und gegen diesen Vorgang wirkt die Feder 17.

Dagegen wird der Kolben von dem in der Zulaufkammer vorhandenen Zulaufdruck praktisch nicht beeinflusst, da dieser Druck in radialer Richtung wirkt. Andererseits hängen die von dem Fluss erlittenen Druckabfälle nur von der Intensität des Flusses und den diesem entgegengesetzten Widerständen und nicht von dem Absolutwert des Drucks ab. Das Verhalten des Kolbens wiederum wird nicht durch den Wert des Zulaufdrucks und von dessen Änderungen beeinflusst.

Der begrenzte axiale Durchgang 12 und die Rückholfeder 17 müssen relativ zueinander proportioniert werden, so dass die Wirkung der Feder 17 im Wesentlichen der Kraft entspricht, die dazu neigt, den Kolben aus der ersten Position in die zweite Position zu verschieben, wenn der vom Durchflussbegrenzungsmittel 10 zugelassene maximale Fluss abgeleitet wird. Der Kolben wiederum behält seine in Fig. 1 dargestellte erste Position bei, solange der angeforderte Fluss unterhalb des genannten Maximalwerts bleibt.

Wenn hingegen vom Ablaufanschluss 4 ein Durchfluss verlangt wird, der größer als der oben definierte maximale ist, reduziert sich der Druck in der Ablaufkammer 7, und die auf den Kolben 8 wirkende Druckdifferenz übersteigt die Kraft der Rückholfeder 17. Nun verschiebt sich der Kolben 8 in seine in Fig. 2 dargestellte zweite Öffnungsposition. Der Mantelabschnitt 9 hört auf, den Durchgang zwischen der Zulaufkammer 13 und der Zwischenkammer 16 zu unterbrechen, und der Durchgang des Flusses von der Zulaufkammer 13 zur Ablaufkammer 7 wird im Wesentlichen frei.

Wenn danach der angeforderte Durchfluss von neuem reduziert oder ganz abgeschaltet wird, übersteigt die Wirkung der Rückholfeder 17 wieder die auf den Kolben 8 wirkende Druckdifferenz, und dieser bewegt sich von neuem in seine erste Schließposition gemäß Fig. 1.

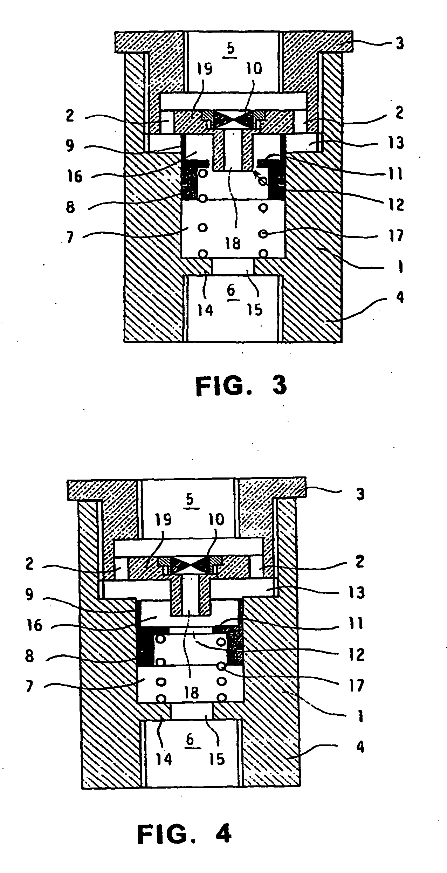

In den Fig. 3 bis 8, die andere Ausführungsformen der Erfindung zeigen, sind die Teile, die gleich sind oder den Teilen der ersten Ausführungsform entsprechen, mit den gleichen Bezugszahlen bezeichnet.

In der bisher beschriebenen Ausführungsform erleidet, wenn sich der Kolben 8 unter Freigabe des Durchgangs von der Zulaufkammer 13 zur Zwischenkammer 16 in seine zweite Position bewegt, der Fluss noch eine gewisse Verengung seitens des reduzierten Durchgangs 12 der transversalen Wand 11 des Kolbens 8. Diese Verengung kann bei der Ausführungsform gemäß den Fig. 3 und 4 eliminiert werden.

Bei dieser Ausführungsform sind alle Teile mit denjenigen der Ausführungsform gemäß den Fig. 1 und 2 identisch, mit Ausnahme der Tatsache, dass der Durchgang 12 der transversalen Wand 11 des Kolbens 8 einen wesentlich größeren Durchmesser aufweist, um nicht seinerseis eine schädliche Verengung zu verursachen, und sein Querschnitt ist, wenn sich der Kolben 8 in seiner ersten Schließposition befindet, mit Hilfe eines rohrförmigen Vorsprungs 18 reduziert, der sich von der transversalen Wand 19 des Zulaufanschlusses 3 ausgehend in den Durchgang 12 hinein erstreckt und in dem der von dem Durchflussbegrenzungsmittel 10 stammende Fluss verläuft. Wie aus Fig. 4 ersichtlich, hört der Vorsprung 18 bei Verschiebung des Kolbens 8 in seine zweite Position auf, den Querschnitt des Durchgangs 12 zu reduzieren, der wiederum keine Verengung mehr darstellt.

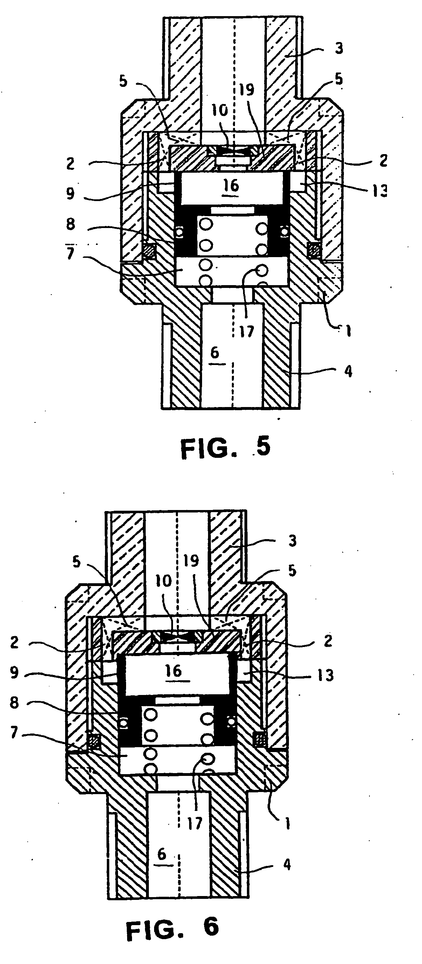

Die Fig. 5 stellt eine Ausführungsform dar, die sich konstruktiv von den vorhergehenden dadurch unterscheidet, dass die Anschlussteile vom Typ Männchen und nicht vom Typ Weibchen sind. Außerdem unterscheidet sich diese Ausführungsform von den vorhergehenden in der Konstruktion des Zulaufanschlusses 3, der in diesem Fall ein Zusatzelement 19 aufweist, das zwischen den Anschluss 3 und den Körper 1 der Vorrichtung eingesetzt ist und das Teil des Zulaufanschlusses 3 wird. Das Zusatzelement 19 bestimmt mittels radialer Durchgänge die Einlasskammer 5 und bildet die axialen Umfangsdurchgänge 2, die in der Zulaufkammer 13 münden. Die Verwendung des Zusatzelements 19 ermöglicht eine Vereinfachung der Konstruktion des Zulaufanschlusses 3 und ist dann besonders wirtschaftlich, wenn das Zusatzelement 19 aus Kunststoffmaterial hergestellt wird.

Die Fig. 6 zeigt eine weitere Ausgestaltung der Ausführungsform gemäß Fig. 5. Bei dieser Ausführungsform kann der Rand des Endes des Mantelabschnitts 9 des Kolbens 8, der bei den vorhergehenden Ausführungsformen an der ebenen Oberfläche des Zulaufanschlusses 3 anlag, teilweise in einen in dieser ebenen Oberfläche ausgesparten Sitz eingreifen.

Der Vorteil dieser Anordnung besteht in der Tatsache, dass bei einer abrupten Variation des Ablaufdurchflusses der Kolben 8 zufälligerweise eine begrenzte Verschiebung erleiden kann, die ihn zur zweiten Öffnungsposition bringen kann, auch wenn der Ablaufdurchfluss den vorbestimmten Wert für die Unterdrückung der Beschränkung des Durchgangsquerschnitts des kalten Zulaufwassers nicht überschritten hat. In diesem Fall, wenn das Verschließen des Kolbens 8 durch einfaches Anliegen des Rands des Mantelabschnitts 9 erfolgt, tritt ohne weiteres, zumindest zeitweise, ein Zustand der Öffnung des Durchgangsquerschnitts auf. Wenn dagegen die eben unter Bezug auf Fig. 6 beschriebene Anordnung eingesetzt wird, modifiziert eine begrenzte zufällige Verschiebung des Kolbens 8 derart, dass der Rand des Mantelabschnitts 9 nicht außerhalb des in dem Zulaufanschluss vorgesehenen Sitzes gebracht wird, den Zustand der Beschränkung des Durchgangsquerschnitts nicht und gibt keinen Anlass für Unannehmlichkeiten.

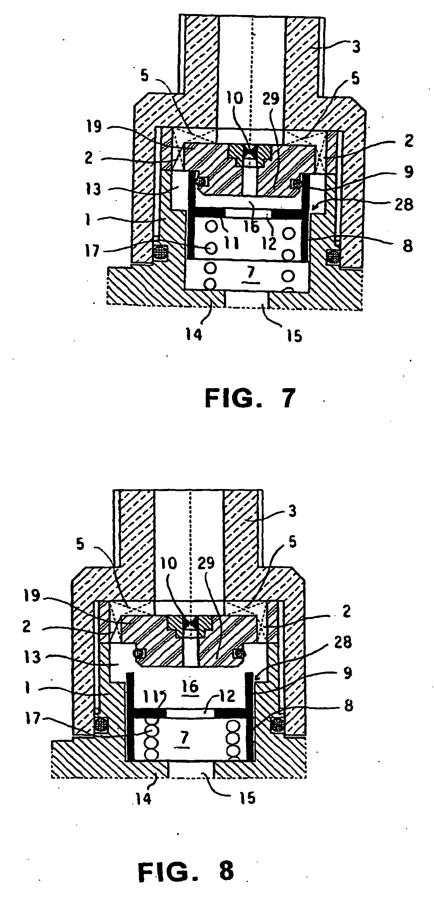

Das gleiche Prinzip, das unter Bezugnahme auf Fig. 6 erläutert wurde, findet eine andere Anwendung in Form der Ausführungsform gemäß den Fig. 7 und 8. In diesem Fall erfolgt die teilweise Einführung zwischen dem Mantel 9 des Kolbens 8 und einem Teil des Zusatzelements 19, das Teil des Zulaufanschlusses 3 ist, durch das Eindringen eines Vorsprungs 29 des Elements 19 in das Innere des Mantels 9. Der Vorsprung 29 ist mit einer Ringdichtung versehen, die im Zustand axialer Kompression in einem Sitz angeordnet ist. Diese Dichtung bremst die Bewegungen des Kolbens 8 leicht ab, um dessen zufällige Verschiebungen zu vermeiden, und kompensiert außerdem die Toleranzen der Teile hinsichtlich ihrer Koaxialiät, wodurch eine einfachere und wirtschaftlichere Herstellung ermöglicht wird.

In den Fig. 7 und 8 ist außerdem ersichtlich, dass ein kleiner Zwischenraum 28 zwischen dem Kolben 8 und dem Körper 1 der Vorrichtung vorgesehen ist. Dieser Zwischenraum ermöglicht, in der Ruhestellung des Kolbens 8, den Durchgang eines reduzierten Flusses zusätzlich zu dem von dem Durchflussbegrenzungsmittel 10 erlaubten Fluss, ohne deswegen die Funktionsweise der Vorrichtung zu modifizieren, die unter Berücksichtigung auch dieses Flusses projektiert wird. Das Vorhandensein dieses Zwischenraums ermöglicht eine Herstellung der Teile mit größeren Toleranzen und dadurch mit reduzierten Kosten.

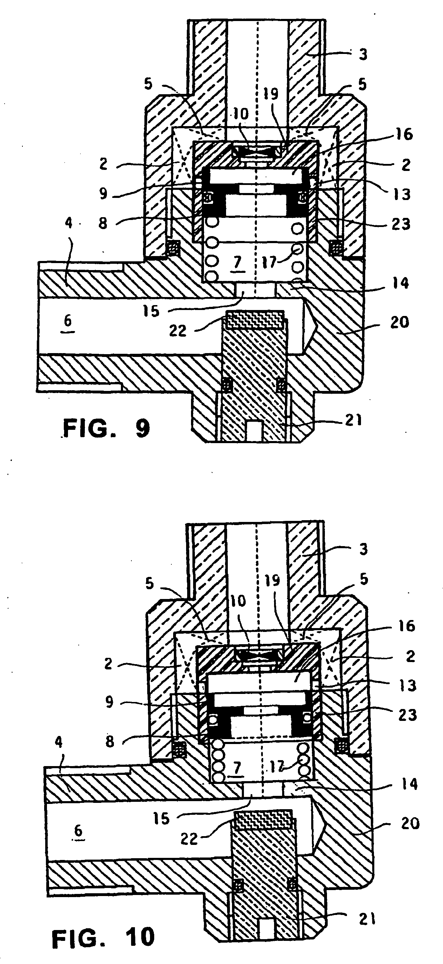

Die Fig. 9 und 10 stellen im Ruhezustand bzw. im Zustand eines großen Durchflusses einen Absperrhahn dar, der eine Vorrichtung für die dynamische Regelung des Flusses gemäß Fig. 6 enthält.

In diesem Fall entspricht eine Hälfte des Körpers 21, die in den Figuren oben dargestellte, in ihrer Form und den enhaltenen Teilen im Wesentlichen dem oberen Teil der in Fig. 6 dargestellten Vorrichtung, während der untere Teil des Körpers 20 einen normalen Verschluss 21 eines Absperrhahns aufnimmt, dessen Dichtung 22 gegen die vom Durchgang 15 durchsetzte transversale Wand 14 wirkt. In diesem Fall weist der Körper 20 seitlich den Ablaufanschluss 4 mit dem Ablaufdurchgang 6 auf. Dies ergibt eine kompakte Komponente, deren Abmessungen nur wenig größer sind als diejenigen eines normalen Absperrhahns und die eine Vereinfachung der Anlage ermöglicht, indem anstatt zweier nur eine Komponente in Serie mit einem thermostatischen Mischer installiert wird.

Außerdem ist bei dieser Ausführungsform das Zusatzelement 19, das Teil des Zulaufanschlusses 3 ist, unter Bildung eines Zylinders 23, in dem der Kolben 8 läuft, verlängert. Die Zulaufkammer 13 ist durch in diesem Zylinder 23 gebildete Öffnungen gebildet.

Es ist festzuhalten, dass die verschiedenen Modifikationen von Teilen der Vorrichtung, die bezüglich spezifischer Ausführungsformen beschrieben worden sind, im allgemeinen auch bei den anderen Ausführungsformen eingesetzt werden können.

Wie aus dem Vorstehenden hervorgeht, ermöglicht die Erfindung die Realisierung einer Vorrichtung zur dynamischen Regelung eines Wasserflusses, die praktisch nicht gegenüber Variationen des Zulaufdrucks des kalten Wassers empfindlich ist, dessen Fluss sie regelt, um diesen in einen thermostatischen Mischer zu schicken, um dessen Funktionsweise zu stabilisieren. Demzufolge ist es nicht mehr erforderlich, die Last der Rückholfeder abhängig von dem in der Anlage vorhandenen Zulaufdruck einzustellen, und es ist selbst dann keinerlei Defekt des Funktionierens der Vorrichtung mehr zu beobachten, wenn sich aus irgendwelchen Gründen dieser Zulaufdruck in größerem Ausmaß ändert. Die Vorrichtung kann so realisiert werden, dass sie verschiedene Anforderungen der Installation erfüllt, indem einfach eine geeignete Proportionierung ihrer Teile ausgewählt wird, und wenn es nützlich erscheint, kann sie angesichts ihrer Einfachheit und ihrer begrenzten Abmessungen in einen Absperrhahn eingebaut werden.

Es ist festzuhalten, dass die Erfindung nicht auf die beschriebenen und als Beispiele dargestellten Ausführungsformen beschränkt ist. Es sind verschiedenste Modifikationen beschrieben worden, und weitere gehören zum Können eines Fachmanns. Diese und weitere Modifikationen sowie jegliche Ersetzung durch technische Äquivalente können dem Beschriebenen und Dargestellten hinzugefügt werden, ohne dass damit der Schutzbereich der Erfindung und dieses Patentes verlassen würde.

## Patentansprüche

1. Vorrichtung zur dynamischen Regelung eines Flusses, umfassend, in einem Körper (1), einen Einlassanschluss (3), eine Zulaufkammer (13), eine Ablaufkammer (7), einen Kolben (8), der zwischen der Zulaufkammer (13) und der Ablaufkammer (7) angeordnet und beweglich ist zwischen einer ersten Position, die zur Zulaufkammer (13) hin verschoben ist, wobei der Kolben (8) in der ersten Position den Fluss zwischen der Zulaufkammer (13) und der Ablaufkammer (7) verengt, und einer zweiten Position, die zur Ablaufkammer (7) hin verschoben ist, wobei der Kolben (8) in der zweiten Position den Fluss zwischen der Zulaufkammer (13) und der Ablaufkammer (7) nicht verengt, und eine Rückholfeder (17), die den Kolben (8) zur ersten Position hin beaufschlagt, **dadurch gekennzeichnet, dass** die Zulaufkammer (13) zumindest teilweise ringförmig ist und den Kolben (8) umgibt, dass der Kolben (8) einen im Bereich der Zulaufkammer (13) angeordneten zylindrischen Mantelabschnitt (9) und einen transversalen Abschnitt (11), der eine stromaufwärts gelegene Zwischenkammer (16) begrenzt und von einem axialen begrenzten Durchgang (12) durchsetzt ist, umfasst, dass zwischen dem Einlassanschluss (3) und der Zwischenkammer (16) ein Durchflussbegrenzungsmittel (10) angeordnet ist, und dass der axiale begrenzte Durchgang (12) und die Rückholfeder (17) so proportional zueinander sind, dass die Wirkung der Feder (17) im Wesentlichen der Kraft entspricht, die dazu neigt, den Kolben (8) aus der ersten Position in die zweite Position zu verschieben, wenn der von dem Durchflussbegrenzungsmittel (10) zugelassene maximale Fluss abgeleitet wird.

2. Vorrichtung zur dynamischen Regelung eines Flusses nach Anspruch 1, **dadurch gekennzeichnet, dass** die Zwischenkammer (16) in dem Körper (1) der Vorrichtung durch den Zulaufanschluss (3) begrenzt ist, in dem eine Einlasskammer (5) definiert ist und der eine transversale Wand (19) aufweist, in der axiale Umfangsdurchgänge (2) gebildet sind, die in der ringförmigen Zulaufkammer (13) münden, die den Kolben (8) umgibt, während im Zentrum der transversalen Wand (19) das Durchflussbegrenzungsmittel (10) installiert ist.

3. Vorrichtung zur dynamischen Regelung eines Flusses nach Anspruch 2, **dadurch gekennzeichnet, dass** die Einlasskammer (5) und die axialen Umfangsdurchgänge (2) aus Durchgängen gebildet sind, die in einem Zusatzelement (19) enthalten sind, das zwischen den Körper (1) der Vorrichtung und den Zulaufanschluss (3), dessen Teil es ist, eingesetzt ist.

4. Vorrichtung zur dynamischen Regelung eines Flusses nach Anspruch 3, **dadurch gekennzeichnet, dass** das Zusatzelement (19) so verlängert ist, dass es einen Vorsprung (29) bildet, der in den Kolben (8) hineinragt und der eine ringförmige Dichtung trägt, die in axialer Kompression in ihrem Sitz angeordnet ist.

5. Vorrichtung zur dynamischen Regelung eines Flusses nach Anspruch 3, **dadurch gekennzeichnet, dass** das Zusatzelement (19) so verlängert ist, dass es einen Zylinder (23), in dem der Kolben (8) läuft, bildet und die Zulaufkammer (13) durch in dem Zylinder (23) angeordnete Öffnungen gebildet wird.

6. Vorrichtung zur dynamischen Regelung eines Flusses nach Anspruch 3, **dadurch gekennzeichnet, dass** das Zusatzelement (19) aus gestanztem Kunststoffmaterial hergestellt ist.

7. Vorrichtung zur dynamischen Regelung eines Flusses nach Anspruch 2, **dadurch gekennzeichnet, dass** der Kolben (8) in seiner ersten Schließposition an der ebenen Oberfläche des Zulaufanschlusses (3) anliegt.

8. Vorrichtung zur dynamischen Regelung eines Flusses nach Anspruch 2, **dadurch gekennzeichnet, dass** der Kolben (8) in seiner ersten Schließposition teilweise in einen Sitz eingesetzt ist, der von einer ebenen Oberfläche des Zulaufanschlusses (3) gebildet ist.

9. Vorrichtung zur dynamischen Regelung eines Flusses nach Anspruch 2, **dadurch gekennzeichnet, dass** der Kolben (8) in seiner ersten Schließposition teilweise auf einen Vorsprung aufgesteckt ist, der von einer ebenen Oberfläche des Zulaufanschlusses (3) gebildet ist.

10. Vorrichtung zur dynamischen Regelung eines Flusses nach Anspruch 1, **dadurch gekennzeichnet, dass** der Kolben (8) mit einem Zwischenraum in den Körper (1) der Vorrichtung eingesetzt ist.

11. Vorrichtung zur dynamischen Regelung eines Flusses nach Anspruch 1, **gekennzeichnet durch** ihren Einbau in Serie in den Kaltwasserzulauf eines thermostatischen Mischers zu dessen Stabilisierung.

12. Absperrhahn zum Einbau in Serie in den Kaltwasserzulauf eines thermostatischen Mischers, **dadurch gekennzeichnet, dass** er eine Vorrichtung zur dynamischen Regelung eines Flusses nach einem der vorhergehenden Ansprüche enthält.

13. Vorrichtung zur dynamischen Regelung eines Flusses nach Anspruch 12, **dadurch gekennzeichnet, dass** die Verschiebungsrichtung des Kolbens (8) mit der Achse eines Verschlusselements (21) des Absperrhahns zusammenfällt.

## Claims

1. Dynamic flow control device comprising, inside a body (1), an inlet connection (3), an inflow chamber (13), an outflow chamber (7), a piston (8) arranged between the inflow chamber (13) and the outflow chamber (7) and movable between a first position lying adjacent the inflow chamber (13), the piston (8) in said first position restricting the flow between the inflow chamber (13) and the outflow chamber (7), and a second position lying adjacent the outflow chamber (7), the piston (8) in said second position not restricting the flow between the inflow chamber (13) and the outflow chamber (7), and a return spring (17) urging the piston (8) towards the first position, **characterised in that** the inflow chamber (13) is at least partially annular and encloses the piston (8), **in that** the piston (8) comprises a cylindrical wall portion (9) disposed in the area of the inflow chamber (13) and a transverse portion (11) delimiting an upstream intermediate chamber (16) and pierced by an axial delimited passage (12), **in that** a flow-limiting means (10) is arranged between the inlet connection (3) and **in that** the intermediate chamber (16), and the axial delimited passage (12) and the return spring (17) are so proportioned relative to one another that the action of the spring (17) is substantially equal to the force that tends to move the piston (8) from the first position to the second position when the maximum flow permitted by the flow-limiting means (10) is drawn off.

2. Dynamic flow control device according to Claim 1, **characterised in that** the intermediate chamber (16) inside the body (1) of the device is delimited by the inlet connection (3) in which there is defined an inlet chamber (5) and which has a transverse wall (19) wherein there are formed axial circumferential passages opening into the annular inflow chamber (13) which encloses the piston (8), while the flow-limiting means (10) is mounted in the centre of the transverse wall (19).

3. Dynamic flow control device according to Claim 2, **characterised in that** the inlet chamber (5) and the axial circumferential passages (2) are formed by passages contained in an accessory member (19) inserted between the body (1) of the device and the inlet connection (3) of which it is a part.

4. Dynamic flow control device according to Claim 3, **characterised in that** the accessory member (19) is elongated such as to form a projection (29) which extends into the piston (8) and carries an annular seal which is axially compressed in its seating.

5. Dynamic flow control device according to Claim 3, **characterised in that** the accessory member (19) is elongated such as to form a cylinder (23) in which the piston (8) travels, and the inflow chamber (13) is formed by openings in the cylinder (23).

6. Dynamic flow control device according to Claim 3, **characterised in that** the accessory member (19) is made of stamped plastic.

7. Dynamic flow control device according to Claim 2, **characterised in that** the piston (8) in its first closing position lies against the flat surface of the inlet connection (3).

8. Dynamic flow control device according to Claim 2, **characterised in that** the piston (8) in its first closing position is partially inserted into a seating formed by a flat surface of the inlet connection (3).

9. Dynamic flow control device according to Claim 2, **characterised in that** the piston (8) in its first closing position is partially mounted on a projection formed by a flat surface of the inlet connection (3).

10. Dynamic flow control device according to Claim 1 **characterised in that** the piston (8) is inserted into the body (1) of the device with a gap therebetween.

11. Dynamic flow control device according to Claim 1 **characterised in that** it is fitted in series in the cold water feed of a thermostatic mixer for the stabilisation thereof.

12. Stopcock for fitting in series in the cold water feed of a thermostatic mixer, **characterised in that** it comprises a dynamic flow control device according to any one of the preceding claims.

13. Dynamic flow control device according to Claim 12 **characterised in that** the direction in which the piston (8) travels coincides with the axis of a closure member (21) of the stopcock.

## Revendications

1. Dispositif de régulation dynamique d'un écoulement, comprenant, dans un corps (1), un raccord d'admission (3), une chambre d'alimentation (13), une chambre d'évacuation (7), un piston (8), qui est agencé entre la chambre d'alimentation (13) et la chambre d'évacuation (7) et est mobile entre une première position, qui est décalée vers la chambre d'alimentation (13), le piston (8) dans la première position réduisant l'écoulement entre la chambre d'alimentation (13) et la chambre d'évacuation (7), et une deuxième position, qui est décalée vers la chambre d'évacuation (7), le piston (8) dans la deuxième position ne réduisant pas l'écoulement entre la chambre d'alimentation (13) et la chambre d'évacuation (7), et un ressort de rappel (17), qui sollicite le piston (8) vers la première position, **caractérisé en ce que** la chambre d'alimentation (13) est au moins partiellement annulaire et entoure le piston (8), **en ce que** le piston (8) comprend une partie d'enveloppe (9) cylindrique agencée dans la zone de la chambre d'alimentation (13) et une partie transversale (11), qui délimite une chambre intermédiaire (16) située en amont et est traversée par le passage (12) axial limité, **en ce qu'**un moyen de limitation de débit (10) est agencé entre le raccord d'admission (3) et la chambre intermédiaire (16), et **en ce que** le passage (12) axial limité et le ressort de rappel (17) sont proportionnels l'un par rapport à l'autre de sorte que l'effet du ressort (17) correspond essentiellement à la force, qui tend à déplacer le piston (8) de la première position à la deuxième position, lorsque l'écoulement maximal autorisé par le moyen de limitation de débit (10) est évacué.

2. Dispositif de régulation dynamique d'un écoulement selon la revendication 1, **caractérisé en ce que** la chambre intermédiaire (16) dans le corps (1) du dispositif est délimitée par le raccord d'alimentation (3), dans lequel est définie une chambre d'admission et qui présente une paroi transversale dans laquelle sont formés des passages périphériques, qui débouchent dans la chambre d'alimentation (13) annulaire, qui entoure le piston (8), pendant que le moyen de limitation de débit (10) est installé au centre de la paroi transversale (19).

3. Dispositif de régulation dynamique d'un écoulement selon la revendication 2, **caractérisé en ce que** la chambre d'admission (5) et les passages périphériques (2) axiaux sont formés par des passages, qui sont contenus dans un élément supplémentaire (19), qui est inséré entre le corps (1) du dispositif et le raccord d'alimentation (3), dont il fait partie.

4. Dispositif de régulation dynamique d'un écoulement selon la revendication 3, **caractérisé en ce que** l'élément supplémentaire (19) est prolongé de sorte à former une saillie (29), qui dépasse dans le piston (8) et qui porte un joint annulaire, qui est agencé en compression axiale dans son siège.

5. Dispositif de régulation dynamique d'un écoulement selon la revendication 3, **caractérisé en ce que** l'élément supplémentaire (19) est prolongé de sorte à former un cylindre (23), dans lequel se déplace le piston (8) et la chambre d'alimentation (13) est formée par des ouvertures agencées dans le cylindre (23).

6. Dispositif de régulation dynamique d'un écoulement selon la revendication 3, **caractérisé en ce que** l'élément supplémentaire (19) est fabriqué à partir d'un matériau plastique estampé.

7. Dispositif de régulation dynamique d'un écoulement selon la revendication 2, **caractérisé en ce que** le piston (8) s'appuie dans sa première position fermée contre la surface plane du raccord d'alimentation (3).

8. Dispositif de régulation dynamique d'un écoulement selon la revendication 2, **caractérisé en ce que** le piston (8) dans sa première position fermée est partiellement inséré dans un siège, qui est formé par une surface plane du raccord d'alimentation (3).

9. Dispositif de régulation dynamique d'un écoulement selon la revendication 2, **caractérisé en ce que** le piston (8) dans sa première position fermée est partiellement enfiché sur une saillie, qui est formée par une surface plane du raccord d'alimentation (3).

10. Dispositif de régulation dynamique d'un écoulement selon la revendication 1, **caractérisé en ce que** le piston (8) est inséré avec une chambre intermédiaire dans le corps (1) du dispositif.

11. Dispositif de régulation dynamique d'un écoulement selon la revendication 1, **caractérisé par** son montage en série dans l'alimentation d'eau froide d'un mélangeur thermostatique pour sa stabilisation.

12. Robinet d'arrêt pour le montage en série dans l'alimentation d'eau froide d'un mélangeur thermostatique **caractérisé en ce qu'**il comprend un dispositif de régulation dynamique d'un écoulement selon l'une quelconque des revendications précédentes.

13. Dispositif de régulation dynamique d'un écoulement selon la revendication 12, **caractérisé en ce que** le sens de déplacement du piston (8) coïncide avec l'axe d'un élément d'obturation (21) du robinet d'arrêt.
